(19) Europäisches Patentamt
European Patent Office
Office européen des brevets

(11) **EP 3 264 709 B1**

(12) **EUROPEAN PATENT SPECIFICATION**

(45) Date of publication and mention
of the grant of the patent:
**29.08.2018   Bulletin 2018/35**

(51) Int Cl.:
***H04L 29/06*** *(2006.01)*

(21) Application number: **16177141.5**

(22) Date of filing: **30.06.2016**

(54) **A METHOD FOR COMPUTING, AT A CLIENT FOR RECEIVING MULTIMEDIA CONTENT FROM A SERVER USING ADAPTIVE STREAMING, THE PERCEIVED QUALITY OF A COMPLETE MEDIA SESSION, AND CLIENT**

VERFAHREN ZUR BERECHNUNG, BEI EINEM CLIENT ZUM EMPFANG VON MULTIMEDIAINHALT VON EINEM SERVER MITTELS ADAPTIVEM STREAMING, DER WAHRGENOMMENEN QUALITÄT EINER VOLLSTÄNDIGEN MEDIENSITZUNG SOWIE CLIENT

PROCÉDÉ DE CALCUL AU NIVEAU D'UN CLIENT POUR RECEVOIR UN CONTENU MULTIMÉDIA À PARTIR D'UN SERVEUR À L'AIDE DE DIFFUSION EN FLUX ADAPTATIVE, QUALITÉ PERÇUE D'UNE SESSION MULTIMÉDIA COMPLÈTE ET CLIENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.01.2018   Bulletin 2018/01**

(73) Proprietor: **Deutsche Telekom AG**
**53113 Bonn (DE)**

(72) Inventors:
• **ROBITZA, Werner**
**10961 Berlin (DE)**
• **GARCIA, Marie-Neige**
**10249 Berlin (DE)**
• **RAAKE, Alexander**
**10405 Berlin (DE)**
• **LIST, Peter**
**59427 Unna (DE)**
• **FEITEN, Bernhard**
**13437 Berlin (DE)**
• **WÜSTENHAGEN, Ulf**
**15537 Grünheide (DE)**

(74) Representative: **Vossius & Partner**
**Patentanwälte Rechtsanwälte mbB**
**Siebertstrasse 3**
**81675 München (DE)**

(56) References cited:
**WO-A1-2008/048155     US-A1- 2012 117 225**

**Description**

The present invention relates to multimedia streaming over the internet, and in particular to determining a measure for the quality of perception of audiovisual content transmitted using adaptive streaming.

The recent advances in audio/video compression and network efficiency (in terms of bandwidth and latency) have resulted in the proliferation of video streaming services over the Internet. Below, the two main methods for multimedia streaming over the Internet are described.

**RTP streaming**

Due to the stringent delay requirements of multimedia streaming and the need for timely delivery of real-time audio-visual content, the Real Time Protocol (RTP) was originally designed to define packet formats for audio and video content along with stream session management, which allows delivery of those packets with low overhead. Moreover, RTP is typically transported over the User Datagram Protocol, which is an unreliable protocol, and can ensure low delay times between the transmitter and the receiver. Since RTP-based applications require a managed network, they can scale easily. However, RTP-streaming cannot pass through firewalls and issues occur when Network Address Translation (NAT) is used.

**HTTP streaming**

The proliferation of multimedia streaming services over HTTP is attributed to the following reasons:

(a) with the increase of network bandwidth and reduced delay in packet networks, there is no need for usage of small packets anymore;
(b) managed networks are replaced by Content Distribution Networks (CDN) which enable the usage of existing infrastructure (e.g HTTP servers, HTTP caches);
(c) HTTP streaming avoids Network Address Translation (NAT) and firewall traversal issues which are typical in RTP-based streaming;
(d) HTTP streaming is client-based, which means that the client is responsible for managing the streaming procedure; thus, HTTP streaming is easy to scale since it does not require any additional configuration at the server-side;
(e) for small to medium-scale streaming services, instead of a (more complex) streaming server application, a regular web server software can be used to serve media files.

The following documents art are referred to herein:

[1] Sodagar, I.: The MPEG-DASH standard for multimedia streaming over the internet. MultiMedia, IEEE 18(4), 62-67 (2011)
[2] Gros, L., Chateau, N.: Instantaneous and overall judgements for time-varying speech quality: Assessments and relationships. Acta Acustica 87(3), 367-377 (2001)
[3] Cranley, N., Perry, P., Murphy, L.: User perception of adapting video quality. Int. J. Hum.-Comput. Stud. 64(8), 637-647 (2006)
[4] Technical Report Service Quality Definition and Measurement http://www.ngmn.org/uploads/media/NGMN-P-SERQU_Service_Quality_Definition_and_Measurement_-_A_Technical_Report_by_NGMN_Alliance_v1_0_4_.pdf,
[5] Seshadrinathan, K., Bovik, A.: Temporal hysteresis model of time varying subjective video quality. In: IEEE Int. Conference on Acoustics, Speech and Signal Processing, pp. 1153-1156 (2011)
[6] ITU-T Delayed Contribution D.064: Testing the quality of connections having time varying impairments. Source: AT&T, USA (J. H. Rosenbluth), 1998.
[7] B. Weiss et al., Modeling Call Quality for Time-Varying Transmission Characteristics Using Simulated Conversational structures, Acta Acustica (2009)
[8] Seufert, M., Egger, S., Slanina, M., Zinner, T., Hossfeld, T., & Tran-Gia, P. (2015). A Survey on Quality of Experience of HTTP Adaptive Streaming. IEEE Communication Surveys & Tutorials Communication Surveys & Tutorials, 17(1), 469-492.
[9] M. N. Garcia, F. De Simone, S. Tavakoli, N. Staelens, S. Egger, K. Brunnström and A. Raake (2014). Quality of Experience and HTTP adaptive streaming: A review of subjective studies. Sixth International Workshop on Quality of Multimedia Experience (QoMEX).
[10] ITU-T P.1201, Parametric non-intrusive assessment of audiovisual media streaming quality (2012)

Further related technology is shown in WO 2008/048155, US 2012/117225 and WO 2012/055022 A1.

There are two main types of video streaming over HTTP: (a) progressive download and (b) HTTP adaptive streaming (HAS). In progressive download, the client may begin the playback of the media before the whole media is downloaded. However, if the available throughput is lower than the bitrate of the media, the player will stall until enough data have been downloaded. This is perceived by the end users as freezing without skipping, which is typically called *rebuffering* or *stalling*. After enough data have been loaded, the playback will resume at the position of stopping. To avoid the stops during playback and enable smoother flow of video, HAS methods adapt to the available network conditions. HAS is applied in many proprietary solutions, such as Adobe Dynamic Streaming, Apple HTTP Live Streaming (HLS), or Microsoft Smooth Streaming. Dynamic Adaptive Streaming over HTTP (DASH) has been standardized in MPEG [1]. In HAS delivery, the media is segmented into short intervals, typically between 2 and 10 seconds long, and each media segment (i.e., consecutive non-overlapping intervals of media) is encoded in multiple quality versions, called *"representations"*. Representations may differ in terms of encoding quantization settings, spatial resolution, temporal resolution (video frame rate), and audio bitrate. The adaptive streaming client (e.g., a web browser or a standalone application) periodically requests segments of the media content from an HTTP server, and then decodes and displays the received segments. The client may switch between different representations at each request depending (mainly) on the available network bandwidth. The aim is to provide the best Quality of Experience (QoE) for the user by avoiding rebuffering events. However, the perceived artefact in this case is the fluctuating quality of the media sequence. Quality models, which aim at predicting the experience of a user watching the media sequence, should consider the impact of temporal quality adaptation on the overall user experience.

If the adaption strategy is not well chosen or implemented, or in the case of strong network congestion, stalling may still occur, and both quality variation and stalling may happen in the same media playout session.

Quality variation and stalling can be avoided, to some extent, by employing larger client buffers. However, this results in long initial startup delays of the video, which may be unacceptable in case of live streaming and frequent switches between TV channels.

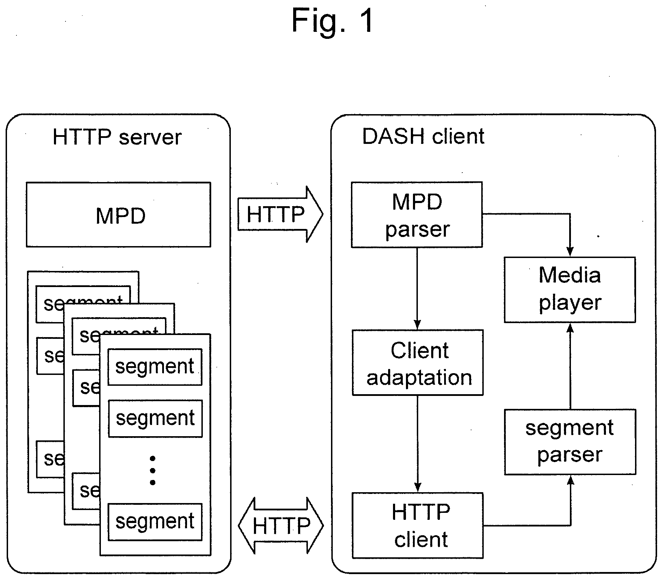

Fig. 1 depicts the architecture of a typical HTTP adaptive streaming system using MPEG-DASH. At the server side, a media presentation description (MPD) metadata file provides information about the structure and the different versions (representations) that are available. These representations may be encoded with different bitrates, frame rates, resolutions, codec types, etc.). In addition, the format of the segments may also be specified by the protocol; typical protocols that are used in existing systems include the MPEG-2 Transport Stream format (in HLS and MPEG-DASH) and MPEG-4 format (in MPEG-DASH, Microsoft Smooth Streaming, and HLS). At the client side, the MPD metadata information is parsed and used to determine the optimal representation to request, based on the client playback capabilities and the observed network conditions. It must be noted that the client adaptation strategy is non-normative, i.e. not specified by the protocol, and the client has the ability to apply any adaptation technique or algorithm for the request of the available data at the server-side. As previously mentioned, the client adaptation may be determined based on the network conditions, the user preferences, or the device capabilities (e.g. CPU, display resolution, memory usage) in order to optimize the QoE of the viewer.

To ensure the end-to-end quality of the audiovisual signal over fixed and mobile networks, network operators and broadcast vendors can utilize so-called objective audiovisual quality models. Objective video quality models have been developed and used for some time in the academic world, but it is just in recent years that standards for quality models have emerged (see ITU-T G.1011 for an overview of standardized video, audio, speech, and audiovisual quality models). These standards are mainly perceptual full-reference models and target video-only or audio-only quality, e.g. ITU-T recommendations J.144, J.247 and J.341. Perceptual models have the advantage that they can utilize information at a signal level of the processed (decoded) video or audio. A big disadvantage of perceptual models is that they are computationally demanding and therefore not very suitable for deployment on a large scale for network monitoring purposes. In addition, in the case of full-reference models, the reference signal is compared against the processed video, in order to estimate the amount of degradation caused by coding and transmission. In the practical case of real-time service monitoring, the reference signal is not available, and the full-reference models are therefore not applicable. A more light-weight and no-reference approach has been standardized in ITU-T SG12 as Recommendation ITU-T P.1201 [10]. This model does not require the reference signal and works on encrypted bitstreams. It takes network layer protocol headers as input to estimate the quality of the transmitted audio and video. This makes the model very efficient to implement and use, but the estimation of the quality of the transmitted audiovisual signal may be less accurate in some cases.

The main novelty in media transmission for the case of HAS is the introduction of (deliberate) changes in quality over time. Most of the existing quality assessment algorithms assume constant coding quality over the whole sequence, and have been designed for short media durations - typically between 10 and 20 seconds. With HAS services, the base quality is varying over time, and the period over which the quality varies typically lasts more than 20 seconds. In addition, these services facilitate the switching between devices and video resolutions (TV screens, Tablet PCs, Smartphone) during playback. Quality models therefore have to be adapted to estimate quality for sequences of longer duration (from a few seconds to several minutes), for fluctuating quality within the sequence, and even for switching between devices.

Quality models are preferably developed based on the results of subjective tests. In such tests a panel of naive viewers is asked to rate media quality. These ratings are used as the ground truth for developing, training and validating objective models. Since traditional subjective test methodologies focus on short sequence durations and a limited selection of terminal devices (TV screens), the increased use of HAS services implies a revision of the existing standardized subjective test methods (ITU-R Rec. BT.500, ITU-T Rec. P.910 and P.911). In this context, ITU-T Rec. P.913 was released in 2014. It aims at giving researchers more freedom in the conduction of subjective tests.

The impact of time-varying quality on human perception was investigated in [2 ,5-9], and it was shown that subjects notice quality degradations faster than quality improvements. Moreover, it was shown that the location of a quality degradation or improvement influences subjects' overall judgements, revealing a so-called recency effect. This effect suggests that subjects remember the last portions of a media session better than the middle sections. On the video domain, user perception of adapting quality was studied in [3, 4], revealing that the perception of spatial distortions over time can be largely modified by their temporal changes.

The QoE models previously known and described above do, however, not provide a comprehensive solution for QoE estimates of adaptive streaming services, which are prone to switching between representations, stalling and initial loading degradations. They do not consider the combined effect of representation switches, stalling and initial loading in the same media sequence [9]. Moreover, existing solutions generally target short- or medium-term QoE prediction (10s up to several tens of seconds, below 1 min), while longer-term predictions are needed for adaptive streaming. It is also suggested that predicting the experienced quality for a long-term session will more adequately reflect consumption scenarios that occur in reality.

It is therefore an object of the present invention to overcome the problems of the prior art and to provide a quality estimate for content to be transmitted, in particular a complete media session.

This object is achieved with the features of the claims.

In order to solve these problems, it is the gist of the invention to compute the perceived quality of a complete media session $Q_{AVBuff}$ of longer duration (e.g., in the range of around 1-5 min) based on a list of estimates of quality for short-duration periods (e.g., in the range of around 1-15 seconds) S and a list of rebuffering events $B$, including the position and duration of each rebuffering event. It considers the location effects of quality changes in the (audio)visual scores and rebuffering events and their impact on human perception. The short-duration quality estimates may, for example, have been obtained by an objective quality model. They may correspond to the audiovisual quality or video quality only. The rebuffering events may have been obtained from network or client logs or algorithms that estimate the rebuffering events (so-called "buffer models").

The invention provides a method for computing, at a client for receiving multimedia content from a server using adaptive streaming, the perceived quality of a complete media session, $Q_{AVBuff}$, based on a list of estimates of quality for short-duration periods, S, and a list of rebuffering events, $B$, including the position and duration of each rebuffering event, the method comprising:

receiving, at a preparation module, the list of estimates of quality for short-duration periods, S, and scaling the values of the short-duration period quality scores, S, from full range of their original input range to a target output range, and transforming the scaled scores into output scores, S', that correspond to 1-second pieces of media, and receiving, at the preparation module (100) the list of rebuffering events, $B$;

supplying the output scores, S', to a parameter extraction module and a encoding quality integration module, and supplying the list of rebuffering events, B, to a buffering quality module;

analyzing, at the parameter extraction module, the per-second scores, S', to calculate a parameter set, P, that identifies characteristics of the media session, wherein the parameter extraction module performs a moving average calculation based on the supplied output scores, S', to obtain a moving average score, $S^{MA}$, and performs a quality direction change estimation, $QC$, based on the moving average score, $S^{MA}$, and wherein the calculated parameter set, P, comprises a parameter *tendency*, wherein the parameter *tendency* is a value describing the shape of the quality scores, S, over the entire session;

supplying the parameter set, P, to the encoding quality integration module and to the buffering quality module;

temporally pooling, at the encoding quality integration module and using the computed parameter set, P, the per-second scores, S', received from the preparation module, yielding an integrated audiovisual quality score, $Q_{AV}$, and supplying the audiovisual quality score, $Q_{AV}$, to a degradation integration module, wherein the encoding quality integration module performs a quality oscillation compensation by applying a degradation factor to the media session quality, $Q_{AV}$;

calculating, at the buffering quality module, the degradation, *DegBuff,* due to rebuffering events, based on the received list of rebuffering events, $B$, and the received parameters, P, and supplying the degradation value, *DegBuff,* to the degradation integration module, wherein the buffering quality module (400) performs different degradation calculations depending on the length of the rebuffering event, and uses the weights *WLoc* and *WQ* as weighing factors, where *WLoc* is a weight depending on location, and *WQ* is a weight depending on tendency; and obtaining, at the degradation integration module (500), the final quality score, $Q_{AVBuff}$, from the degradation, *DegBuff*, due to rebuffering events and the integrated audiovisual quality score, $Q_{AV}$.

The method may further comprise receiving, at the preparation module, the interval, *n*, between each quality score in *S.*

In calculating the moving average score, the parameter extraction module may perform a padding of the scores, *S',* at the beginning and at the end with the first and last score in *S'* to create padded scores, $S^{padded}$.

The estimation of the quality direction change, *QC,* is preferably performed by comparing each score, indexed by *p,* with the next one, indexed by *q,* in a certain step size $s_{qc}$ and checking whether the difference exceeds or falls within a threshold $t_{qc}$.

The extracted parameter set, *P,* may comprise at least one of the number, *N,* of scores in *S',* a value, *tendency,* describing the shape of the quality scores over time, the total number of quality direction changes in the scores, *QDirChangesTot,* and the duration in seconds of the longest period without positive and negative quality change, *QDirChangesLongest.*

The quality oscillation compensation is preferably only applied if the following condition is true, that is, when the longest period without quality change is smaller than a part of the session $p_{osc}$, and the longest oscillation is not longer than a given absolute duration threshold $t_{osc}$:

$$\frac{QDirChangesLongest}{N} < p_{osc} \wedge QDirChangesLongest < t_{osc}$$

$$p_{osc} = \{x \in \mathbb{R} \mid 0 \leq x \leq 1\}$$

$$t_{osc} = \{x \mid 0 \leq x \leq N\}$$

The encoding quality integration module may perform a recency effect compensation based on the supplied output scores, *S*', and the parameter set, *P.*

The length of the recency period $L_r$ may depend on at least one of sequence duration *N,* the value of the parameter *tendency,* and the average quality $Q_r$ in the recency period $L_r$.

The recency effect is may not be applied depending on the value of the parameter *tendency,* or if the average quality during the recency period is above a given threshold.

The invention further provides a client for receiving multimedia content from a server using adaptive streaming, the client being for computing the perceived quality of a complete media session, $Q_{AVBuff}$, based on a list of estimates of quality for short-duration periods, *S,* and a list of rebuffering events, *B,* including the position and duration of each rebuffering event. The client comprises a preparation module adapted to receive a list of estimates of quality for short-duration periods, *S,* and to scale the values of the short-duration period quality scores, *S,* from full range of their original input range to a target output range, and to transform the scaled scores into output scores, *S',* that correspond to 1-second pieces of media, the preparation module (100) further being adapted to receive the list of rebuffering events, *B.* The client further comprises a parameter extraction module adapted to analyze the per-second scores, *S',* to calculate a parameter set, *P,* that identifies characteristics of the media session. The parameter extraction module is further adapted to perform a moving average calculation based on the supplied output scores, *S',* to obtain a moving average score, $S^{MA}$, and to perform a quality direction change estimation, *QC,* based on the moving average score, $S^{MA}$. The calculated parameter set, *P,* comprises a parameter *tendency,* wherein the parameter *tendency* is a value describing the shape of the quality scores, *S,* over the entire session. Furthermore, the client comprises an encoding quality integration module adapted to, using the computed parameter set, *P,* temporally pool the per-second scores, *S',* received from the preparation module (100), yielding an integrated audiovisual quality score, $Q_{AV}$, and to perform a quality oscillation compensation by applying a degradation factor to the media session quality, $Q_{AV}$. The client also comprises a buffering quality module adapted to receive the list of rebuffering events, *B,* from the preparation module, and a list of parameters P from the parameter extraction module, and is further adapted to calculate the degradation, *DegBuff,* due to rebuffering events, wherein the buffering quality module performs different degradation calculations depending on the length of the rebuffering event, and uses the weights *WLoc* and *WQ* as weighing factors, where *WLoc* is a weight depending on location, and *WQ* is a weight depending on tendency. Finally, the client comprises a degradation integration module adapted to obtain the final quality score, $Q_{AVBuff}$, from the degradation, *DegBuff,* due to rebuffering events and the integrated audiovisual quality score, $Q_{AV}$.

The preparation module may be further being adapted to receive the interval, *n*, between each quality score in *S.*

In calculating the moving average score, the parameter extraction module is preferably adapted to perform a padding of the scores, *S*', at the beginning and at the end with the first and last score in *S'* to create padded scores, $S^{padded}$.

The estimation of the quality direction change, *QC,* is preferably performed by comparing each score, indexed by *p*, with the next one, indexed by *q,* in a certain step size $s_{qc}$ and checking whether the difference exceeds or falls within a threshold $t_{qc}$.

The extracted parameter set, *P,* comprises at least one of the number, *N,* of scores in *S'*, a value, *tendency,* describing the shape of the quality scores over time, the total number of quality direction changes in the scores, *QDirChangesTot,* and the duration in seconds of the longest period without positive and negative quality change, *QDirChangesLongest.*

The encoding quality integration module is preferably adapted to perform a recency effect compensation based on the supplied output scores, *S'*, and the parameter set, *P.*

According to a preferred aspect of the client, the quality oscillation compensation is only applied if the following condition is true, that is, when the longest period without quality change is smaller than a part of the session $p_{osc}$, and the longest oscillation is not longer than a given absolute duration threshold $t_{osc}$:

$$\frac{QDirChangesLongest}{N} < p_{osc} \land QDirChangesLongest < t_{osc}$$

$$p_{osc} = \{x \in \mathbb{R} \mid 0 \leq x \leq 1\}$$

$$t_{osc} = \{x \mid 0 \leq x \leq N\}$$

The method length of the recency period $L_r$ preferably depends on at least one of sequence duration *N,* the value of the parameter *tendency,* and the average quality $Q_r$ in the recency period $L_r$.

The recency effect is preferably not applied depending on the value of the parameter *tendency,* or if the average quality during the recency period is above a given threshold.

Other aspects, features, and advantages will be apparent from the summary above, as well as from the description that follows, including the figures and the claims. In the Figures,

Fig. 1    shows the architecture of HTTP adaptive streaming in MPEG-DASH, wherein hatched blocks denote the modules which are defined by the standard, whereas shaded blocks denote the modules which are either non-normative or defined by the HTTP protocol,

Fig. 2    illustrates the basic concept of an embodiment of the present invention,

Fig. 3    shows a detailed scheme of a preparation module according to an embodiment of the invention,

Fig. 4    shows a detailed scheme of a parameter extraction module according to an embodiment of the invention,

Fig. 5    shows a detailed scheme of an encoding quality module according to an embodiment of the invention,

Fig. 6    shows a detailed scheme of a buffering quality module according to an embodiment of the invention; and

Fig. 7    illustrates the recency effect compensation obtained with the present invention.

When discussing the present invention, the following terminology will be used:

- User: user of the service, specifically an adaptive streaming service.
- Perceived media quality: refers to the quality as perceived by the user. This quality may be degraded due to compression degradations, initial loading, and/or audio-video pausing, referred to as stalling.
- Media session: a complete video/TV program, for instance a complete movie; the media session may be shorter than the complete media duration, for instance, if the user changes channels (zapping). The media session may also be a fixed measurement window of a few minutes, for instance five minutes.
- Segment: a small part of the media content, typically between 2s and 10s long. Each segment is encoded with a given representation, which at playback time is selected by the adaptive streaming client.
- Representation: The representation refers to the chosen video resolution, video codec, video bitrate, video frame rate, audio codec, and audio bitrate for a given segment. Typically, a given sequence is encoded into a fixed set of representations from which a given representation is chosen for a given segment.

It is the gist of the invention to compute the perceived quality of a complete media session $Q_{AVBuff}$ of longer duration (e.g., in the range of around 1-5 min) based on a list of estimates of quality for short-duration periods (e.g., in the range of around 1-15 seconds) S and a list of rebuffering events B, including the position and duration of each rebuffering event. It considers the location effects of quality changes in the (audio)visual scores and rebuffering events and their impact on human perception. The short-duration quality estimates may, for example, have been obtained by an objective quality model. They may correspond to the audiovisual quality or video quality only. The rebuffering events may have been obtained from network or client logs or algorithms that estimate the rebuffering events (so-called "buffer models").

In more detail, the invention performs the following steps or computations:

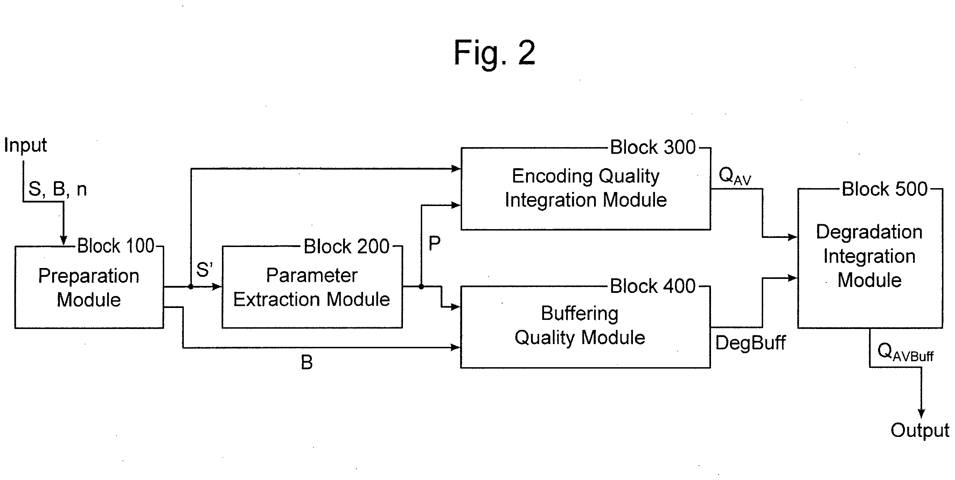

- Step 1 - Preparation Module (Block 100 in Fig. 2): The values of the short-duration period quality scores S are scaled from full range of their original scale to the internal range and sliced into scores that correspond to 1-second pieces of media, called the *per-second scores* (S').
- Step 2 - Parameter Extraction Module (Block 200 in Fig. 2): The per-second scores S' are analyzed to extract the parameter set P that identifies characteristics of the media session.
- Step 3 - Encoding Quality Integration Module (Block 300 in Fig. 2): The per-second scores S' are temporally pooled, yielding an integrated audiovisual quality score $Q_{AV}$.
- Step 4 - Buffering Quality Module (Block 400 in Fig. 2): The degradation due to rebuffering events is calculated in the *buffering quality module* as *DegBuff.*
- Step 5 - Degradation Integration Module (Block 500 in Fig. 2): The integrated audiovisual quality score is modified by, for instance, subtracting the degradation due to rebuffering events, resulting in the final score $Q_{AVBuff}$.

In the following preferred solutions or implementations for each of the above steps will be described.

Detailed Description of the Invention - Best Mode

Description of Inputs

As can be seen in Fig. 2, the input to the preparation module 100 consists of three elements:

1. *S*: A 1-dimensional vector of numerical quality scores corresponding to fixed-interval estimates of the quality of the media session of which the final quality estimate should be calculated. The interval must be at least 1 second and must be in full seconds.

2. *B:* A 2×b matrix of rebuffering events that were observed (or estimated to have been observed) in the media session, with b equal to the number of rebuffering events.

Each column in the matrix $B_{i,j}$ for *j* = 1,2,...,b contains two entries $B_{1,j}, B_{2,j} \in \Re_{>0}$:

a) $B_{1,j}$: The start time of the rebuffering event in seconds (not considering other rebuffering events before or after, that is, the time in seconds relative to the media stream)
b) $B_{2,j}$: The duration of the rebuffering event in seconds.

For example, for rebuffering events at 0, 5, and 42 seconds, with lengths of 4.2, 3.2 and 9 seconds each, *B* is equal to:

$$B = \begin{bmatrix} 0 & 5 & 42 \\ 4.2 & 3.2 & 9 \end{bmatrix}$$

3. *n:* The interval between each quality score in *S,* in seconds.

The implied order of the quality scores in *S* is assumed to be known by the preparation module. For example, the quality scores in *S* may originate from a quality model that outputs scores in the range [1,10], where 10 corresponds to the worst possible rating rather than the best. This has to be considered later.

**Preparation Module (Block 100)**

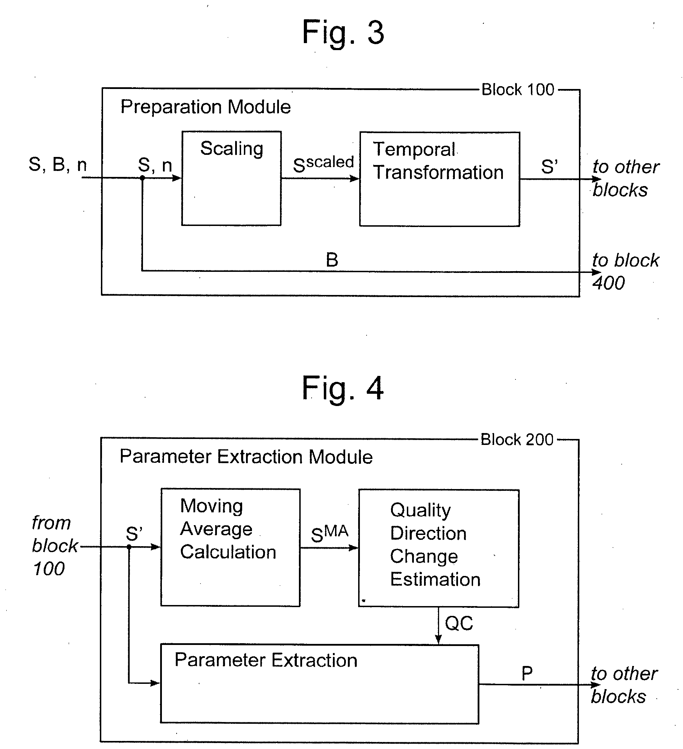

In the *Preparation Module* (Block 100 in Fig. 2 detailed in Fig. 3), the input scores *S* will be scaled to a target output range and temporally transformed into a list of per-second-scores $S$'. The preparation module forwards the information $B$ as-is.

**Scaling**

The input $S$ is scaled from its original input range to the target output range, resulting in a list of scaled scores $S^{scaled}$. Let the input minimum be $I_{min}$, the input maximum be $I_{max}$, the output minimum be $O_{min}$, and the output maximum be $O_{max}$. Typically, $O_{min} = 1$ and $O_{max} = 5$. Note that the input minimum and maximum do not depend on the *actual* scores in $S$, but the possible total range of scores.

For every score $S_i$ in $S$, the module calculates a corresponding scaled score $S_i^{scaled}$ in $S^{scaled}$ :

$$S_i^{scaled} = \frac{S_i - I_{min}}{I_{max} - I_{min}} * (O_{max} - O_{min}) + O_{min} \qquad 1.1$$

The above assumes that the implicit order of scores is the same for input and output, that is, the lowest numerical score corresponds to the lowest quality rating. If the input order is reversed, in the above equation, $S_i$ is replaced by $(I_{max} - S_i)$.

**Temporal Transformation**

In order to perform the temporal transformation, $S^{scaled}$ is sliced according to the interval of the input scores, to arrive at output scores $S$' with an output interval of $o=1$ second. The interval of $S$ is $n$ seconds. For every score $S_i$ in $S$, there will be $n$ scores in $S$' which all have the same value as $S_i$.

The following algorithm may be used to create $S$':

```
Sscaled = Input vector of scores
S' = Empty output vector
n = Input interval in seconds
for score in Sscaled:
i = 1
while i <= n:
 S' .append(score)
 i = i + 1
```

In the following, the total number of scores in $S$' is referred to as $N$.

**Parameter Extraction Module (Block 200)**

In the *Parameter Extraction Module* (Block 200 in Fig. 2, detailed in Fig. 4), a set of parameters P will be defined, based on the characteristics of the scores in $S$'. Each parameter has a name and a numerical or categorical value. Before the parameters are extracted, a moving average of the scores in $S$' is calculated and an estimation of quality direction changes is performed.

**Moving Average Calculation**

A moving average of the quality scores is calculated to smooth out small variations in quality. First, a moving average of order $k$ is defined. The order depends on the expected variation of the input quality scores. For example, $k = 5$.

Then, the scores $S$' are padded at the beginning and at the end with the first and last score in $S$', respectively, to create $S^{padded}$, where:

$$S_i^{padded} = S_1' \quad i = 1, 2, \dots, k - 1 \qquad 1.2$$

$$S_{i+k-1}^{padded} = S_i' \quad i = 1, 2, \dots, N \qquad 1.3$$

$$S^{padded}_{i+k-1} = S'_N \quad i = N+1, N+2, \ldots, N+(k-1) \qquad 1.4$$

A convolution kernel $K$ is created as a vector of size $k$ where:

$$K_j = \frac{1}{k} \quad j = 1, 2, \ldots, k \qquad 1.5$$

The full moving average $S^{FMA}$ is calculated as the convolution:

$$S^{FMA} = S^{padded} * K \qquad 1.6$$

The values from the beginning of the sequence are then clipped from the moving average scores, such that the length of $S^{MA}$ is equal to $N + k - 1$:

$$S^{MA}_i = S^{FMA}_i \quad k \le i \le N+(k-1) \qquad 1.7$$

**Quality Direction Change Estimation**

To estimate the direction changes of the quality scores (positive, negative, equal), the below algorithm is applied on $S^{MA}$, to result in a list $QC$. It compares each score (indexed by $p$) with the next one (indexed by $q$) in a certain step size $s_{qc}$ and checks whether the difference exceeds or falls within a threshold $t_{qc}$.

The step size $s_{qc}$ determines the step when searching for quality direction changes. It is a positive integer number $\ge 1$ and depends on the order of the moving average filter $k$.

The detection threshold $t_{qc}$ is a positive rational number in the range $[0, O_{max} - O_{min}]$.

$$QC_i = \begin{cases} 1, & \left(S^{MA}_q - S^{MA}_p\right) > t_{qc} \\ 0, & -t_{qc} < \left(S^{MA}_q - S^{MA}_p\right) < t_{qc} \\ -1, & \text{otherwise} \end{cases} \qquad 1.8$$

Where:

$$i \in \left\{1, 2, \ldots, \left\lfloor N/s_{qc} \right\rfloor\right\} \qquad 1.9$$

$$p \in \left\{x \mid \exists n : \left(n \in \mathbb{N}^0 \wedge 1 + n * s_{qc} \le x \le N - s_{qc}\right)\right\}$$

$$q \in \left\{x \mid \exists n : \left(n \in \mathbb{N}^+ \wedge 1 + n * s_{qc} \le x \le N\right)\right\}$$

For example, $s_{qc} = 3$ and $t_{qc} = 0.2$. Then, for $i = 1, 2, \ldots$, for example, $QC_i$ compares $S^{MA}_1$ against $S^{MA}_4$, $S^{MA}_4$ against $S^{MA}_7$, and so on.

**Parameter Extraction**

The following parameters may preferably be extracted and added to $P$:

**N**

$N$ is added to the parameters, as defined before (equal to the length of the score vector $S'$).

**Tendency**

A categorical value describing the shape of the quality scores over time, in the entire media session. The value is obtained as follows. First, a smoothing period of s seconds is defined. This smoothing period may depend on the overall length of the sequence *N*:

$$s = f_s(N) \qquad\qquad 1.10$$

For example, a constant function $f_s$ may yield s = 10. Or, $f_s \in \{log, exp, ...\}$.

The vector *S'* is split into three equal or nearly-equal-size vectors $S'_{beg}$, $S'_{mid}$ and $S'_{end}$ such that:

$$S'_{beg} = \left\{ S'_i \;\middle|\; 1 \le i \le \left( \left\lfloor \frac{N}{3} \right\rfloor + s \right) \right\} \qquad\qquad 1.11$$

$$S'_{mid} = \left\{ S'_i \;\middle|\; \left( \left\lfloor \frac{N}{3} \right\rfloor - s \right) \le i \le \left( 2 * \left\lfloor \frac{N}{3} \right\rfloor + s \right) \right\} \qquad\qquad 1.12$$

$$S'_{end} = \left\{ S'_i \;\middle|\; \left( 2 * \left\lfloor \frac{N}{3} \right\rfloor - s \right) \le i \le N \right\} \qquad\qquad 1.13$$

Let the length of each of these vectors be $N_{beg}$, $N_{mid}$ and $N_{end}$, respectively. Then, a modified average score of each of these ($Avg_{beg}$, $Avg_{mid}$ and $Avg_{end}$) is calculated as follows, rounding the score to the nearest $s_{round}$, where $s_{round}$ is a positive rational number between 0 and 1, and:

$$Avg_{beg} = \frac{\left\| \frac{\sum_{i=1}^{N_{beg}} S'_{beg_i}}{N_{beg}} \times \frac{1}{s_{round}} \right\|}{s_{round}} \qquad\qquad 1.14$$

$$Avg_{mid} = \frac{\left\| \frac{\sum_{i=1}^{N_{mid}} S'_{mid_i}}{N_{mid}} \times \frac{1}{s_{round}} \right\|}{\frac{1}{s_{round}}} \qquad\qquad 1.15$$

$$Avg_{end} = \frac{\left\| \frac{\sum_{i=1}^{N_{end}} S'_{end_i}}{N_{end}} \times \frac{1}{s_{round}} \right\|}{\frac{1}{s_{round}}} \qquad\qquad 1.16$$

Finally, the value of *tendency* is set as follows:

$$tendency = \begin{cases} contRamp, & Avg_{beg} < Avg_{mid} < Avg_{end} \\ contDrop, & Avg_{beg} > Avg_{mid} > Avg_{end} \\ peak, & Avg_{beg} < Avg_{mid} > Avg_{end} \\ drop, & Avg_{beg} > Avg_{mid} < Avg_{end} \\ lateRamp, & Avg_{beg} = Avg_{mid} \wedge Avg_{mid} < Avg_{end} \\ lateDrop, & Avg_{beg} = Avg_{mid} \wedge Avg_{mid} > Avg_{end} \\ earlyRamp, & Avg_{beg} < Avg_{mid} \wedge Avg_{mid} = Avg_{end} \\ earlyDrop, & Avg_{beg} > Avg_{mid} \wedge Avg_{mid} = Avg_{end} \\ flatHigh, & Avg_{beg} = Avg_{mid} \wedge Avg_{mid} = Avg_{end} \wedge Avg_{beg} \geq t_h \\ flatMiddle, & Avg_{beg} = Avg_{mid} \wedge Avg_{mid} = Avg_{end} \wedge t_{high} \geq Avg_{beg} \\ flatLow, & Avg_{beg} = Avg_{mid} \wedge Avg_{mid} = Avg_{end} \wedge Avg_{beg} < t_m \end{cases}$$

1.17

$t_{high}$ and $t_{med}$ are thresholds defining what constitutes high quality or medium quality. Example values are $t_{high}$ = 4 and $t_{med}$ = 2.5.

**QDirChangesTot**

The total number of quality direction changes in the scores using the $QC_i$ values computed as described above. First, all zero values are removed from *QC.* Consecutive entries of identical values (1 or -1) correspond to one region. *QDirChangesTot* is the total number of regions.

For example, if *QC* = [0,0,1,1,1,0,0, -1, -1,0,1], then *QDirChangesTot* = 3. Or, if *QC* = [0,0,1,0,0, -1,0,0,0], then *QDirChangesTot* = 2.

**QDirChangesLongest**

The duration in seconds of the longest period without positive or negative quality change. To calculate this value, the following algorithm is applied:

For every nonzero value in *QC,* the index and the value are stored in a tuple in a list qc_len, but only if it is the first nonzero value in a consecutive part of the same values. For example, for *QC* = [0,0,1,1,1,0,0, -1, -1,0,1] and the index starting at 1 the list qc_len contains [[3, 1], [8, -1], [11, 1]].

Then, after padding the list qc_len with zero value entries at the beginning and the end, the distances between consecutive indices is stored as distances. In the above example, qc_len becomes [[1, 0], [3, 1], [8, -1], [11, 1], [12, 0]] and the list of distances is [2, 5, 3, 1].

The value of *QDirChangesLongest* is equal to the maximum in the list of distances multiplied by the step size $s_{qc}$, or - in case no quality changes have been observed - simply *N*.

```
qc_len = []
distances = []
N = Length of S'
for index in [0, ..., N],
 value in qc:
if value != 0:
 if qc_len and qc_len[len(qc_len)][2] != value:
   qc_len.append([index, value])
 if not qc_len:
   qc_len.append([index, value])
   if qc_len not empty:
qc_len.prepend([1, 0])
qc_len.append([length(qc) + 1, 0])
for i in [2, ..., length(qc)]:
 distances.append(qc[i] - qc[i - 1])
qdir_changes_longest = max(distances) * s_qc
else:
qdir_changes_longest = N
```

**Encoding Quality Integration Module**

In the encoding quality integration module, the input scores $S'$ are temporally pooled to arrive at an audiovisual quality estimation for the session, referred to as session score. At this stage, buffering events are ignored.

**Recency Effect Compensation**

To adjust the session score for quality drops in the last portions of the media session, which will additionally have an impact on the overall perceived quality, a "recency" effect compensation will be calculated. Recency effect compensation will not be applied if *tendency* in *P* is *flatlow* or *earlyDrop* (see above).

The length of the recency period $L_r$ is calculated based on the duration of the media session $N$:

$$L_r = \left\lceil r_1 + \frac{r_2}{1 + \exp\left(r_3\left(r_4 - \frac{N}{60}\right)\right)} \right\rceil \qquad 1.18$$

The parameters are chosen in such a way that the length will be longer for longer media sessions. For example, $r_1 = 13$, $r_2 = 17$, $r_3 = 2$, $r_4 = 5$.

The mean quality score $Q_r$ in the region between the cutoff point and the end of the media session is calculated. This region is called the recency period, $S_r$:

$$S_r = \{S_i' \mid N - L_r \leq i \leq N\} \qquad 1.19$$

$$Q_r = \frac{\sum S_r}{\overline{S_r}} \qquad 1.20$$

If $Q_r > t_q$, no recency effect compensation will be applied, because the quality is too high in the period to be considered to have an impact on human perception. For example, $t_q = 3.15$.

In that case, $Q_{AV}$ is equal to the mean of the quality scores for the entire session and the next step will be performed according to the quality oscillation compensation described below:

$$Q_{AV} = \frac{\sum S'}{\overline{S'}} \qquad 1.21$$

Otherwise, the computation continues as follows:
Let *WR* be a vector of size *N* which holds weights for individual scores, where:

$$WR_i = 0 \quad i = 1, 2, ..., N \qquad 1.22$$

Let $s_r$ be the slope of the increase of the weights in the recency period. For example, $s_r = 0.10$.

Let $f_r$ be a monotonically increasing function that determines the impact of the recency effect towards the end of the media session:

$$f_r: \mathbb{R} \rightarrow \mathbb{R} \qquad 1.23$$

$$f_r(b) \geq f_r(a) \ \forall \ b > a \qquad 1.24$$

For example, $f_r = \exp$ for an exponential increase or $f_r(y) = p_1 x + p_2$ for a linear increase (with variable slope and intercept $p_1$, $p_2$).

In the recency period, the weights will be set according to the slope $s_r$ and the function $f_r$:

$$WR_{N-L_r+k} = f_r(s_r * (k-1)) \quad k = 1, 2, \ldots, L_r \qquad 1.25$$

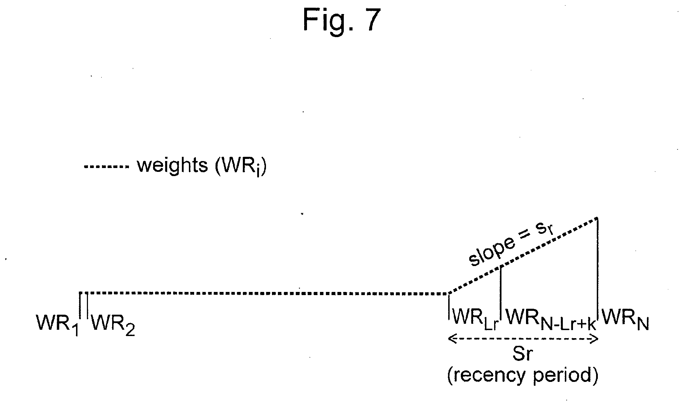

The previous steps are highlighted in Fig. 7.

The sum of the weights in the recency period $SW$ is calculated as follows:

$$SW = \sum_{i=N-L_r+1}^{N} WR_i \qquad 1.26$$

The weights $WR$ will be modified by distributing the sum $SW$ over the non-recency period:

$$WR_i = 1 - \frac{SR - L_r}{N - L_r} \quad i = 1, 2, \ldots, N - L_r \qquad 1.27$$

The audiovisual quality of the session $Q_{AV}$ is calculated as:

$$Q_{AV} = \sum_{i=1}^{N} S_i^l * WR_i * \frac{1}{N} \qquad 1.28$$

**Quality Oscillation Compensation**

To compensate for oscillations of quality, a degradation factor is applied to the media session quality $Q_{AV}$, based on the number of detected quality direction changes. The compensation is only applied if the following condition is true, that is, when the longest period without quality change is smaller than a part of the session $p_{osc}$, that is, when the quality oscillates during a large portion of the session, and the longest oscillation is not longer than a given absolute duration threshold $t_{osc}$:

$$\frac{QDirChangesLongest}{N} < p_{osc} \wedge QDirChangesLongest < t_{osc} \qquad 1.29$$

$$p_{osc} = \{x \in \mathbb{R} \mid 0 \le x \le 1\} \qquad 1.30$$

$$t_{osc} = \{x \mid 0 \le x \le N\} \qquad 1.31$$

For example, $p_{osc} = 0.25$ and $t_{osc} = 30$.

If based on the above condition, quality oscillation compensation should be applied, the degradation is capped to $o_a$ and calculated as:

$$Q_{AV} = Q_{AV} - \min\left(o_1, \exp(o_2 * QDirChanges + o_3)\right) \qquad 1.32$$

The impact of the number of quality direction changes is exponential, with the weights depending on the output quality range. For example, $o_1 = 1.5$, $o_2 = 0.36$, $o_3 = -4.41$.

**Buffering Quality Module**

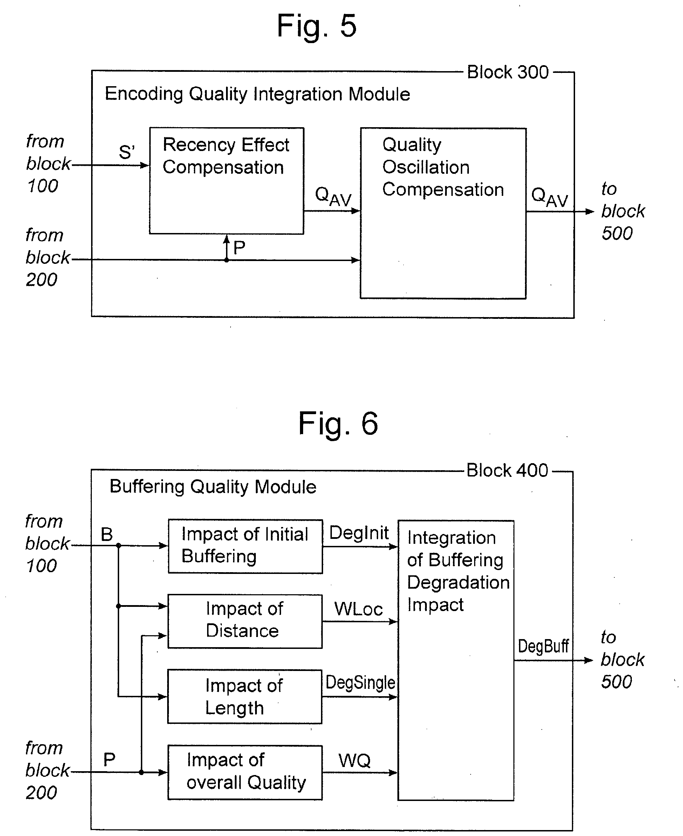

In the Buffering Quality Module (Block 400 in Fig. 2, detailed in Fig. 6), the following procedure is applied to estimate the degradation due to buffering events, *DegBuff,* using *B* as input. In this procedure, the degradation due to rebuffering will be added up from every rebuffering event occurring in the media session.

Let *WLoc, WQ* and *DegSingle* be vectors of the same length as *B* has columns.

For every rebuffering event in B, accessed by the column index *j*, its location (in seconds) and length are extracted as $BLoc_j = B_{1,j}$ and $BLoc_j = B_{2,j}$, respectively.

First, the impact of initial rebuffering will be calculated as described below.

Then, for every event where $BLoc_j \neq 0$, the impact is captured in *WLoc* , *DegSingle* and *WQ* by calculating the following procedures:

1. The distance of the event relative to the end of the media session; see below
2. The length of the event; see below
3. The overall quality of the media session; see below

Once the above steps have been calculated for all events in *B*, the overall impact of rebuffering events is calculated as explained in detail below.

**Impact of Initial Buffering**

The impact of the initial buffering is calculated as:

$$DegInit = \begin{cases} \max(\min(b_1 * \log(BLen_0 + b_2), O_{max} - O_{min}), 0), & BLen_0 > (1 - b_2) \\ 0, & \text{otherwise} \end{cases} \qquad 1.33$$

For example, $b_1 = 0.29$ and $b_2 = -3.29$, the latter being a cutoff point defining where initial buffering degradation starts to be considered.

**Impact of Distance relative to the End**

The distance of the event relative to the end of the media session $B\,Dist_j$ is calculated as:

$$BDist_j = N - BLoc_j \qquad 1.34$$

Depending on $B\,Dist_j$, a weight will be calculated for the rebuffering event:

$$WLoc_j = \max\big(b_3 * f_{dist}(BDist_j) + b_4, b_5\big) \qquad 1.35$$

For example, $b_3 = 0.257$, $b_4 = 0.53$, $b_5 = 0.01$ and $f_{dist} = log$. $f_{dist}$ may be replaced with any other function.

**Impact of Length**

$t_{buf}$ is a threshold that determines the impact curve of the length of every single rebuffering event, providing for different impact characteristics for shorter rebuffering events. For example, $t_{buf} = 10$.

If $BLen_j < t_{buf}$, the degradation of the single rebuffering event $DegSingle_j$ is calculated as follows:

$$DegSingle_j = b_6 * \big(1 - \exp\left(-\exp(b_7 * \log(BLen_j))\right)\big) \qquad 1.36$$

For example, $b_6 = 2.15$ and $b_7 = 2.15$.

If $BLen_j \geq t_{buf}$, the degradation is calculated as follows:

$$DegSingle_j = \min\big(\exp(b_8 * BLen_j - t_{buf}) + O_{min}, O_{max} - O_{min}\big) * b_6 \qquad 1.37$$

For example, $b_8 = 0.45$.

**Impact of overall Quality**

If the overall shape of the media session is constant high quality, the impact of every individual rebuffering event $WQ_j$ will be higher:

$$WQ_j = \begin{cases} b_9, & tendency = flatHigh \\ 1, & otherwise \end{cases} \qquad 1.38$$

For example, $b_9 = 1.21$.

**Integration of Buffering Degradation Impact**

The overall degradation *DegBuff* will be calculated by summing up the degradation due to initial buffering *DegInit* with the individual degradations in *DegSingle,* the latter multiplied by the weights determined before as *WLoc* and *WQ:*

$$DegBuff = \max\left(\min\left(DegInit + \sum_{j=1}^{\bar{b}} WLoc_j \times DegSingle_j \times WQ_j, O_{max} - O_{min}\right), 0\right) \qquad 1.39$$

**Degradation Integration Module**

In the Degradation Integration Module, the outputs $Q_{AV}$ and *DegBuff* are combined into the final quality score $Q_{AVBuff}$

$$Q_{AVBuff} = \min\left(O_{max}, \max(O_{min}, Q_{AV} - DegBuff)\right) \qquad 1.40$$

The value is clipped to the output range.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

List of variables:

This list serves as an overview of the variables used in above descriptions, sorted by order of appearance:

| Variable | Description |
| --- | --- |
| $S$ | Input scores |
| $S^{scaled}$ | Input scores scaled to internal quality range |
| $S'$ | Temporally transformed input scores |
| $n$ | Interval of input scores in seconds |
| $I_{min}, I_{max}$ | Minimum and maximum of input scores |
| $O_{min}, O_{max}$ | Minimum and maximum of output scores |
| $N$ | Number of scores in $S'$ |

(continued)

| Variable | Description |
|----------|-------------|
| $k$ | Order of moving average filter |
| $S^{padded}$ | Padded scores |
| $K$ | Convolution kernel |
| $S^{FMA}$ | Full moving average scores |
| $S^{MA}$ | Moving average scores |
| $QC$ | List of quality changes |
| $s_{qc}$ | Step size for detection of quality changes |
| $t_{qc}$ | Threshold for detection of quality changes |
| $s$ | Smoothing period for tendency estimation |
| $f_s$ | Function to estimate smoothing period $s$ |
| $S'_{beg}, S'_{mid}$ and $S'_{end}$ | Lists of scores in the beginning, middle, or end of the sequence |
| $Avg_{beg}, Avg_{mid}$ and $Avg_{end}$ | Rounded average of $S'_{beg}, S'_{mid}$ and $S'_{end}$ |
| $t_{high}$ | Threshold for detection of high quality scores |
| $t_{med}$ | Threshold for detection of medium quality scores |
| $tendency$ | Value describing temporal tendency of scores |
| $L_r$ | Length of recency period |
| $WR$ | Weights for recency effect compensation |
| $r_1, r_2, r_3, r_4$ | Parameters for recency period estimation |
| $S_r$ | Recency period |
| $Q_r$ | Mean quality score in recency period |
| $s_r$ | Slope for recency effect compensation |
| $f_r$ | Recency weight function |
| $SW$ | Sum of weights in recency period |
| $p_{osc}$ | Part of the session for which oscillations are compensated |
| $t_{osc}$ | Threshold for the time of oscillations |
| $o_1, o_2, o_3$ | Parameters for oscillation compensation |
| $DegBuff$ | Degradation due to buffering events |
| $DegInit$ | Degradation due to initial loading |
| $BLoc$ | Location of a buffering event |
| $BLen$ | Length of a buffering event |
| $WLoc$ | Weight depending on location of buffering event |
| $WQ$ | Weight depending on audiovisual quality of the media session |
| $DegSingle$ | Degradation due to a single rebuffering event |
| $BDist$ | Distance of buffering event relative to end of media session |
| $f_{dist}$ | Function for impact of distance of buffering event |
| $t_{buf}$ | Threshold for length of buffering event |
| $b_1, b_2, ..., b_9$ | Parameters for buffering degradation |

List of Abbreviations:

| | |
|---|---|
| CDN | Content Distribution Network |
| DASH | Dynamic Adaptive Streaming |
| HAS | HTTP Adaptive Streaming |
| HTTP | HyperText Transfer Protocol |
| HLS | HTTP Live Streaming |
| MPD | Media Presentation Description |
| MPEG | Multimedia Pictures Experts Group |
| QoE | Quality of Experience |
| RTP | Real Time Protocol |
| TCP | Transmission Control Protocol |
| UDP | User Datagram Protocol |

**Claims**

1. A method for computing, at a client for receiving multimedia content from a server using adaptive streaming, the perceived quality of a complete media session, $Q_{AVBuff}$, based on a list of estimates of quality for short-duration periods, *S,* and a list of rebuffering events, *B*, including the position and duration of each rebuffering event, the method comprising:

   receiving, at a preparation module (100), the list of estimates of quality for short-duration periods, S, and scaling the values of the short-duration period quality scores, *S,* from full range of their original input range to a target output range, and transforming the scaled scores into output scores, *S',* that correspond to 1-second pieces of media, and receiving, at the preparation module (100) the list of rebuffering events, *B;*
   supplying the output scores, *S'*, to a parameter extraction module (200) and a encoding quality integration module (300), and supplying the list of rebuffering events, *B,* to a buffering quality module (400);
   analyzing, at the parameter extraction module (200), the per-second scores, *S',* to calculate a parameter set, *P,* that identifies characteristics of the media session, wherein the parameter extraction module (200) performs a moving average calculation based on the supplied output scores, *S',* to obtain a moving average score, $S^{MA}$, and performs a quality direction change estimation, *QC,* based on the moving average score, $S^{MA}$, and wherein the calculated parameter set, *P,* comprises a parameter *tendency,* wherein the parameter *tendency* is a value describing the shape of the quality scores, *S,* over the entire session;
   supplying the parameter set, *P,* to the encoding quality integration module (300) and to the buffering quality module (400);
   temporally pooling, at the encoding quality integration module (300) and using the computed parameter set, *P,* the per-second scores, *S',* received from the preparation module (100), yielding an integrated audiovisual quality score, $Q_{AV}$, and supplying the audiovisual quality score, $Q_{AV}$, to a degradation integration module (500), wherein the encoding quality integration module (300) performs a quality oscillation compensation by applying a degradation factor to the media session quality, $Q_{AV}$ ;
   calculating, at the buffering quality module (400), the degradation, *DegBuff,* due to rebuffering events, based on the received list of rebuffering events, *B,* and the received parameters, *P,* and supplying the degradation value, *DegBuff,* to the degradation integration module (500), wherein the buffering quality module (400) performs different degradation calculations depending on the length of the rebuffering event, and uses the weights *WLoc* and *WQ* as weighing factors, where *WLoc* is a weight depending on location, and *WQ* is a weight depending on tendency; and
   obtaining, at the degradation integration module (500), the final quality score, $Q_{AVBuff}$, from the degradation, *DegBuff,* due to rebuffering events and the integrated audiovisual quality score, $Q_{AV}$.

2. The method of claim 1, further comprising receiving, at the preparation module (100), the interval, *n,* between each quality score in *S.*

3. The method of claim 1 or 2, wherein in calculating the moving average score, the parameter extraction module (200) performs a padding of the scores, *S',* at the beginning and at the end with the first and last score in *S'* to create padded scores, $S^{padded}$.

4. The method according to claim 1, 2, or 3, wherein the estimation of the quality direction change, *QC,* is performed by comparing each score, indexed by *p,* with the next one, indexed by *q,* in a certain step size $s_{qc}$ and checking whether the difference exceeds or falls within a threshold $t_{qc}$.

5. The method according to any one of the preceding claims, wherein the extracted parameter set, *P,* comprises at least one of the number, *N,* of scores in *S',* a value, *tendency,* describing the shape of the quality scores over time, the total number of quality direction changes in the scores, *QDirChangesTot,* and the duration in seconds of the longest period without positive and negative quality change, *QDirChangesLongest.*

6. The method of claim 1, wherein the quality oscillation compensation is only applied if the following condition is true, that is, when the longest period without quality change is smaller than a part of the session $p_{osc}$, and the longest oscillation is not longer than a given absolute duration threshold $t_{osc}$:

$$\frac{QDirChangesLongest}{N} < p_{osc} \wedge QDirChangesLongest < t_{osc}$$

$$p_{osc} = \{x \in \mathbb{R} \mid 0 \leq x \leq 1\}$$

$$t_{osc} = \{x \mid 0 \leq x \leq N\}$$

7. The method according to any one of the preceding claims, wherein the encoding quality integration module (300) performs a recency effect compensation based on the supplied output scores, *S',* and the parameter set, *P.*

8. The method of claim 7, wherein the length of the recency period $L_r$ depends on at least one of sequence duration *N,* the value of the parameter *tendency,* and the average quality $Q_r$ in the recency period $L_r$.

9. The method of claim 6 or 7, wherein the recency effect is <u>not</u> applied depending on the value of the parameter *tendency,* or if the average quality during the recency period is above a given threshold.

10. A client for receiving multimedia content from a server using adaptive streaming, the client being for computing the perceived quality of a complete media session, $Q_{AVBuff}$, based on a list of estimates of quality for short-duration periods, *S,* and a list of rebuffering events, *B,* including the position and duration of each rebuffering event, the client comprising:

    a preparation module (100) adapted to receive a list of estimates of quality for short-duration periods, *S,* and to scale the values of the short-duration period quality scores, *S,* from full range of their original input range to a target output range, and to transform the scaled scores into output scores, *S',* that correspond to 1-second pieces of media, the preparation module (100) further being adapted to receive the list of rebuffering events, *B;*
    a parameter extraction module (200) adapted to analyze the per-second scores, *S',* to calculate a parameter set, *P,* that identifies characteristics of the media session, wherein the parameter extraction module (200) is further adapted to perform a moving average calculation based on the supplied output scores, *S',* to obtain a moving average score, $S^{MA}$, and to perform a quality direction change estimation, *QC,* based on the moving average score, $S^{MA}$, and wherein the calculated parameter set, *P,* comprises a parameter *tendency,* wherein the parameter *tendency* is a value describing the shape of the quality scores, *S,* over the entire session;
    an encoding quality integration module (300) adapted to, using the computed parameter set, *P,* temporally pool the per-second scores, *S',* received from the preparation module (100), yielding an integrated audiovisual quality score, $Q_{AV}$, and to perform a quality oscillation compensation by applying a degradation factor to the media session quality, $Q_{AV}$;
    a buffering quality module (400) adapted to receive the list of rebuffering events, *B,* from the preparation module (100), and a list of parameters P from the parameter extraction module (200), and further adapted to calculate the degradation, *DegBuff,* due to rebuffering events, wherein the buffering quality module (400) performs different degradation calculations depending on the length of the rebuffering event, and uses the weights *WLoc* and *WQ* as weighing factors, where *WLoc* is a weight depending on location, and *WQ* is a weight depending on tendency; and
    a degradation integration module (500) adapted to obtain the final quality score, $Q_{AVBuff}$, from the degradation, *DegBuff,* due to rebuffering events and the integrated audiovisual quality score, $Q_{AV}$.

11. The client according to claim 10, the preparation module (100) further being adapted to receive the interval, *n,* between each quality score in *S.*

12. The client of claim 10, or 11, wherein in calculating moving average score, the parameter extraction module (200) is adapted to perform a padding of the scores, *S',* at the beginning and at the end with the first and last score in S' to create padded scores, $S^{padded}$.

13. The client according to claim 10, 11, or 12, wherein the estimation of the quality direction change, *QC,* is performed by comparing each score, indexed by *p,* with the next one, indexed by *q,* in a certain step size $s_{qc}$ and checking whether the difference exceeds or falls within a threshold $t_{qc}$.

14. The client according to any one of claims 10 to 13, wherein the extracted parameter set, *P,* comprises at least one of the number, *N,* of scores in *S',* a value, *tendency,* describing the shape of the quality scores over time, the total number of quality direction changes in the scores, *QDirChangesTot,* and the duration in seconds of the longest period without positive and negative quality change, *QDirChangesLongest.*

15. The client according to any one of claims 10 to 14, wherein the encoding quality integration module (300) is adapted to perform a recency effect compensation based on the supplied output scores, *S',* and the parameter set, *P.*

**Patentansprüche**

1. Verfahren zum Berechnen bei einem Client zum Empfangen von Multimediainhalt von einem Server mittels adaptivem Streaming der wahrgenommenen Qualität einer vollständigen Mediensitzung, $Q_{AVBuff}$, beruhend auf einer Liste von Qualitätsschätzungen für kurzzeitige Perioden, *S,* und einer Liste von Ereignissen, *B,* des erneuten Pufferns von Daten, die die Position und Dauer jedes Ereignisses des erneuten Pufferns von Daten enthält, wobei das Verfahren aufweist:

Empfangen an einem Vorbereitungsmodul (100) der Liste von Qualitätsschätzungen für kurzzeitige Perioden, *S,* und Skalieren der Werte der Qualitätsbewertungen für kurzzeitige Perioden, *S,* vom vollen Bereich ihres ursprünglichen Eingangsbereichs auf einen Zielausgangsbereich und Transformieren der skalierten Bewertungen in Ausgabebewertungen, *S',* die 1-Sekunden-Medienstücken entsprechen, und Empfangen am Vorbereitungsmodul (100) der Liste von Ereignissen, *B,* des erneuten Pufferns von Daten;
Liefern der Ausgabebewertungen, *S',* an ein Parameterextraktionsmodul (200) und ein Codierungsqualitätsintegrationsmodul (300), und Liefern der Liste von Ereignissen, *B,* des erneuten Pufferns von Daten an ein Pufferqualitätsmodul (400);
Analysieren am Parameterextraktionsmodul (200), der Bewertungen pro Sekunde, *S',* um einen Parametersatz, *P,* zu berechnen, der die Eigenschaften der Mediensitzung kennzeichnet, wobei das Parameterextraktionsmodul (200) eine gleitende Durchschnittsberechnung beruhend auf den gelieferten Ausgabebewertungen, *S',* ausführt, um eine gleitende Durchschnittsbewertung, $S^{MA}$, zu erhalten, und eine Schätzung der Qualitätsrichtungsänderung, *QC,* beruhend auf der gleitenden Durchschnittsbewertung, $S^{MA}$, ausführt und wobei der berechnete Parametersatz, *P,* einen Parameter *tendency* aufweist, wobei der Parameter *tendency* ein Wert ist, der die Form der Qualitätsbewertungen, *S,* über eine gesamte Sitzung beschreibt;
Liefern des Parametersatzes, *P,* an das Codierungsqualitätsintegrationsmodul (300) und an das Pufferqualitätsmodul (400);
zeitliches Zusammenfassen am Codierungsqualitätsintegrationsmodul (300) und unter Verwendung des berechneten Parametersatzes, *P,* der vom Vorbereitungsmodul (100) empfangenen Bewertungen pro Sekunde, *S',* wobei sich eine integrierte audiovisuelle Qualitätsbewertung, $Q_{AV}$, ergibt, und Liefern der audiovisuellen Qualitätsbewertung, $Q_{AV}$, an ein Verschlechterungsintegrationsmodul (500), wobei das Codierungsqualitätsintegrationsmodul (300) eine Qualitätsschwankungskompensation durch Anwenden eines Verschlechterungsfaktors auf die Mediensitzungsqualität, $Q_{AV}$ ausführt,
Berechnen am Pufferqualitätsmodul (400) der Verschlechterung, *DegBuff,* infolge der Ereignisse des erneuten Pufferns von Daten beruhend auf der empfangenen Liste von Ereignissen des erneuten Pufferns von Daten, B, und der empfangenen Parameter, *P,* und Liefern des Verschlechterungswerts, *DegBuff,* an das Verschlechterungsintegrationsmodul (500), wobei das Pufferqualitätsmodul (400) unterschiedliche Verschlechterungsberechnungen abhängig von der Länge des Ereignisses des erneuten Pufferns von Daten ausführt, und die Gewichte *WLoc* und *WQ* als Gewichtungsfaktoren verwendet, wobei *WLoc* ein Gewicht ist, das vom Ort abhängt, und *WQ* ein Gewicht ist, das von der Tendenz abhängt; und

Erhalten am Verschlechterungsintegrationsmodul (500) der endgültigen Qualitätsbewertung, $Q_{AVBuff}$ aus der Verschlechterung, *DegBuff,* infolge der Ereignisse des erneuten Pufferns von Daten und der integrierten audiovisuellen Qualitätsbewertung, $Q_{AV}$.

2. Verfahren nach Anspruch 1, das ferner das Empfangen am Vorbereitungsmodul (100) des Intervalls, *n,* zwischen jeder Qualitätsbewertung in S aufweist.

3. Verfahren nach Anspruch 1 oder 2, wobei beim Berechnen der gleitenden Durchschnittsbewertung das Parameterextraktionsmodul (200) ein Auffüllen der Bewertungen, *S',* am Anfang und am Ende mit der ersten und der letzten Bewertung in S' ausführt um aufgefüllte Bewertungen, $S^{padded}$, zu erzeugen.

4. Verfahren nach Anspruch 1, 2, oder 3, wobei die Schätzung der Qualitätsrichtungsänderung, *QC,* durch Vergleichen jeder mit *p* indizierten mit der mit *q* indizierten nächsten Bewertung in einer bestimmten Schrittweite $s_{qc}$ und durch Prüfen durchgeführt wird, ob die Differenz eine Schwelle $t_{qc}$ überschreitet oder innerhalb von ihr liegt.

5. Verfahren nach einem der vorhergehenden Ansprüche, wobei der extrahierte Parametersatz, *P,* zumindest die Anzahl, *N,* der Bewertungen in *S',* und/oder einen Wert *tendency,* der die Form der Qualitätsbewertungen mit der Zeit beschreibt, und/oder die Gesamtzahl der Qualitätsrichtungsänderungen der Bewertungen, *QDirChangesTot,* und/oder die Dauer in Sekunden der längsten Periode ohne positive und negative Qualitätsänderung, *QDirChangesLongest* aufweist.

6. Verfahren nach Anspruch 1, wobei die Qualitätsschwankungskompensation nur angewendet wird, wenn die folgende Bedingung zutrifft, das heißt, wenn die längste Periode ohne Qualitätsänderung kleiner als ein Teil der Sitzung $p_{osc}$ ist, und die längste Schwankung nicht länger als eine gegebene absolute Schwelle der Dauer $t_{osc}$ ist:

$$\frac{QDirChangesLongest}{N} < p_{osc} \wedge QDirChangesLongest < t_{osc}$$

$$p_{osc} = \{x \in \mathbb{R} \mid 0 \leq x \leq 1\}$$

$$t_{osc} = \{x \mid 0 \leq x \leq N\}$$

7. Verfahren nach einem der vorhergehenden Ansprüche, wobei das Codierungsqualitätsintegrationsmodul (300) eine Rezenzeffektkompensation beruhend auf den gelieferten Ausgabebewertungen, *S',* und dem Parametersatz, *P,* ausführt.

8. Verfahren nach Anspruch 7, wobei die Länge der Rezenzperiode $L_r$ zumindest von der Sequenzdauer *N,* und/oder dem Wert des Parameters *tendency* und/oder der durchschnittlichen Qualität $Q_r$ in der Rezenzperiode $L_r$ abhängt.

9. Verfahren nach Anspruch 6 oder 7, wobei der Rezenzeffekt abhängig vom Wert des Parameters *tendency,* oder wenn die durchschnittliche Qualität während der Rezenzperiode über einer gegebenen Schwelle liegt, nicht angewendet wird.

10. Client zum Empfangen von Multimediainhalten von einem Server mittels adaptivem Streaming, wobei der Client zum Berechnen der wahrgenommenen Qualität einer vollständigen Mediensitzung, $Q_{AVBuff}$, beruhend auf einer Liste von Qualitätsschätzungen für kurzzeitige Perioden, S, und einer Liste von Ereignissen des erneuten Pufferns von Daten, *B,* dient, die die Position und Dauer jedes Ereignisses des erneuten Pufferns von Daten enthält, wobei der Client aufweist:

ein Vorbereitungsmodul (100), das eingerichtet ist, eine Liste von Qualitätsschätzungen für kurzzeitige Perioden, *S,* zu empfangen und die Werte der Qualitätsbewertungen für kurzzeitige Perioden, *S,* vom vollen Bereich ihres ursprünglichen Eingangsbereichs auf einen Zielausgangsbereich zu skalieren, und die skalierten Bewertungen in Ausgabebewertungen, *S',* zu transformieren, die 1-Sekunden-Medienstücken entsprechen, wobei das Vorbereitungsmodul (100) ferner eingerichtet ist, die Liste von Ereignissen des erneuten Pufferns von Daten, *B* zu empfangen;

ein Parameterextraktionsmodul (200), das eingerichtet ist, die Bewertungen pro Sekunde, *S'*, zu analysieren, um einen Parametersatz, *P*, zu berechnen, der die Eigenschaften der Mediensitzung kennzeichnet, wobei das Parameterextraktionsmodul (200) ferner eingerichtet ist, eine gleitende Durchschnittsberechnung beruhend auf den gelieferten Ausgabebewertungen, *S'*, durchzuführen, um eine gleitende Durchschnittsbewertung, $S^{MA}$, zu erhalten, und eine Schätzung der Qualitätsrichtungsänderung, *QC*, beruhend auf der gleitenden Durchschnittsbewertung, $S^{MA}$ durchzuführen, und wobei der berechnete Parametersatz, *P*, einen Parameter *tendency* aufweist, wobei der Parameter *tendency* ein Wert ist, der die Form der Qualitätsbewertungen, *S*, über eine gesamte Sitzung beschreibt;

ein Codierungsqualitätsintegrationsmodul (300), das eingerichtet ist, unter Verwendung des berechneten Parametersatzes, *P*, die vom Vorbereitungsmodul (100) empfangenen Bewertungen pro Sekunde, *S'*, zeitlich zusammenzufassen, wobei sich eine integrierte audiovisuelle Qualitätsbewertung, $Q_{AV}$, ergibt, und eine Qualitätsschwankungskompensation durch Anwenden eines Verschlechterungsfaktors auf die Mediensitzungsqualität, $Q_{AV}$, durchzuführen;

ein Pufferqualitätsmodul (400), das eingerichtet ist, die Liste von Ereignissen des erneuten Pufferns von Daten, *B*, vom Vorbereitungsmodul (100) und eine Liste von Parametern *P* vom Parameterextraktionsmodul (200) zu empfangen, und das ferner eingerichtet ist, die Verschlechterung, *DegBuff*, infolge der Ereignisse des erneuten Pufferns von Daten zu berechnen, wobei das Pufferqualitätsmodul (400) unterschiedliche Verschlechterungsberechnungen abhängig von der Länge des Ereignisses des erneuten Pufferns von Daten ausführt, und die Gewichte *WLoc* und *WQ* als Gewichtungsfaktoren verwendet, wobei *WLoc* ein Gewicht ist, das vom Ort abhängt, und *WQ* ein Gewicht ist, das von der Tendenz abhängt; und

ein Verschlechterungsintegrationsmodul (500), das eingerichtet ist, die endgültige Qualitätsbewertung, $Q_{AVBuff}$, aus der Verschlechterung, *DegBuff*, infolge der Ereignisse des erneuten Pufferns von Daten und der integrierten audiovisuelle Qualitätsbewertung, $Q_{AV}$ zu erhalten.

11. Client nach Anspruch 10, wobei der Vorbereitungsmodul (100) ferner eingerichtet ist, das Intervall, *n*, zwischen jeder Qualitätsbewertung in S zu empfangen.

12. Client nach Anspruch 10, oder 11, wobei beim Berechnen der gleitenden Durchschnittsbewertung das Parameterextraktionsmodul (200) eingerichtet ist, ein Auffüllen der Bewertungen, *S'*, am Anfang und am Ende mit der ersten und der letzten Bewertung in S' durchzuführen, um aufgefüllte Bewertungen, $S^{padded}$, zu erzeugen.

13. Client nach Anspruch 10, 11 oder 12, wobei die Schätzung der Qualitätsrichtungsänderung, *QC*, durch Vergleichen jeder mit *p* indizierten mit der mit *q* indizierten nächsten Bewertung in einer bestimmten Schrittweite $s_{qc}$ und Prüfen durchgeführt wird, ob die Differenz eine Schwelle $t_{qc}$ überschreitet oder innerhalb von ihr liegt.

14. Client nach einem der Ansprüche 10 bis 13, wobei der extrahierte Parametersatz, *P*, zumindest die Anzahl, *N*, der Bewertungen in *S'*, und/oder einen Wert *tendency*, der die Form der Qualitätsbewertungen mit der Zeit beschreibt, und/oder die Gesamtzahl der Qualitätsrichtungsänderungen der Bewertungen, *QDirChangesTot*, und/oder die Dauer in Sekunden der längsten Periode ohne positive und negative Qualitätsänderung, *QDirChangesLongest* aufweist.

15. Client nach einem der Ansprüche 10 bis 14, wobei das Codierungsqualitätsintegrationsmodul (300) eingerichtet ist, eine Rezenzeffektkompensation beruhend auf den gelieferten Ausgabebewertungen, *S'*, und dem Parametersatz, *P*, durchzuführen.

**Revendications**

1. Procédé de calcul, au niveau d'un client pour la réception d'un contenu multimédia d'un serveur utilisant la diffusion en streaming adaptative, de la qualité perçue d'une session média complète, $Q_{AVBuff}$, sur la base d'une liste d'évaluations de qualité pour des périodes de courte durée, *S*, et d'une liste d'événements de remise en mémoire tampon, *B*, incluant la position et la durée de chaque événement de remise en mémoire tampon, ledit procédé comprenant :

la réception, au niveau d'un module de préparation (100), de la liste d'évaluations de qualité pour des périodes de courte durée, *S*, et la graduation des valeurs des notes de qualité pour des périodes de courte durée, *S*, de l'intégralité de leur plage d'entrée originale jusqu'à une plage de sortie de consigne, et la transformation des notes graduées en notes de sortie, *S'*, correspondant à des éléments de média de 1 seconde, et la réception, au niveau du module de préparation (100) de la liste d'événements de remise en mémoire tampon, *B ;*

la transmission des notes de sortie, *S'*, à un module d'extraction de paramètres (200) et un module d'intégration de qualité de codage (300), et la transmission de la liste de événements de remise en mémoire tampon, *B,* à un module de qualité de mise en tampon (400) ;

l'analyse, au niveau du module d'extraction de paramètres (200), des notes par seconde, *S',* pour calculer un ensemble de paramètres, *P,* identifiant les caractéristiques de la session média, le module d'extraction de paramètres (200) effectuant un calcul de moyenne mobile sur la base des notes de sortie transmises, *S',* afin d'obtenir une note moyenne mobile, $S^{MA}$, et effectuant une évaluation de changement de direction de qualité, *QC,* sur la base de la note moyenne mobile, $S^{MA}$, et l'ensemble de paramètres calculé, *P,* comprenant un paramètre *tendency,* le paramètre *tendency* étant une valeur décrivant la forme des notes de qualité, *S,* sur toute la session ;

la transmission de l'ensemble de paramètres, *P,* au module d'intégration de qualité de codage (300) et au module de qualité de mise en tampon (400) ;

le regroupement temporaire, au niveau du module d'intégration de qualité de codage (300) et au moyen de l'ensemble de paramètres calculé, *P,* des notes par seconde, *S',* reçues du module de préparation (100), l'obtention d'une note de qualité audiovisuelle intégrée, $Q_{AV}$, et la transmission de la note de qualité audiovisuelle, $Q_{AV}$, à un module d'intégration et de dégradation (500), le module d'intégration de qualité de codage (300) réalisant une compensation d'oscillation de qualité en appliquant un facteur de dégradation à la qualité de session média, $Q_{AV}$ ;

le calcul, au niveau du module de qualité de mise en tampon (400), de la dégradation, *DegBuff,* due aux événements de remise en mémoire tampon, sur la base de la liste reçue des événements de remise en mémoire tampon, *B,* et des paramètres reçus, *P,* et la transmission de la valeur de dégradation, *DegBuff,* au module d'intégration et de dégradation (500), le module de qualité de mise en tampon (400) effectuant différents calculs de dégradation en fonction de la longueur de l'événement de remise en mémoire tampon, et utilisant les pondérations *WLoc* et *WQ* comme facteurs de pondération, *WLoc* étant une pondération dépendante de la localisation, et *WQ* une pondération dépendante de la tendance ; et

l'obtention, au niveau du module d'intégration et de dégradation (500), de la note de qualité finale, $Q_{AVBuff}$, à partir de la dégradation, *DegBuff,* due aux événements de remise en mémoire tampon et de la note de qualité audiovisuelle intégrée, $Q_{AV}$.

2. Procédé selon la revendication 1, comprenant en outre la réception, au niveau du module de préparation (100), de l'intervalle, *n,* entre chaque note de qualité en *S.*

3. Procédé selon la revendication 1 ou la revendication 2, où, lors du calcul de la note moyenne mobile, le module d'extraction de paramètres (200) exécute un gonflage des notes, *S',* au début et à la fin avec la première et la dernière note en *S'* afin de générer des notes gonflées, $S^{padded}$.

4. Procédé selon la revendication 1, la revendication 2 ou la revendication 3, où l'évaluation de changement de la direction de qualité, *QC,* est effectuée en comparant chaque note, indexée par *p,* avec la suivante, indexée par *q,* dans un certain pas de progression $s_{qc}$, et en contrôlant si la différence dépasse un seuil $t_{qc}$, où est en-deçà de celui-ci.

5. Procédé selon l'une des revendications précédentes, où l'ensemble de paramètres extrait, *P,* comprend au moins le nombre, *N,* de notes en *S',* et/ou une valeur *tendency* décrivant la forme des notes de qualité dans la durée, et/ou le nombre total de changements de direction de qualité dans les notes, *QDirChangesTot,* et/ou la durée en secondes de la période la plus longue sans changement de qualité positif et négatif, *QDirChangesLongest.*

6. Procédé selon la revendication 1, où la compensation d'oscillation de qualité n'est appliquée que si la condition suivante est réalisée, en l'occurrence que la période la plus longue sans changement de qualité est plus courte qu'une partie de la session $p_{osc}$, et que l'oscillation la plus longue ne dépasse pas une durée seuil absolue donnée $t_{osc}$ :

$$\frac{QDirChangesLongest}{N} < p_{osc} \wedge QDirChangesLongest < t_{osc}$$

$$p_{osc} = \{x \in \mathbb{R} \mid 0 \leq x \leq 1\}$$

$$t_{osc} = \{x | 0 \leq x \leq N\}$$

7. Procédé selon l'une des revendications précédentes, où le module d'intégration de qualité de codage (300) réalise une compensation d'effet de récence sur la base des notes de sortie, S', et de l'ensemble de paramètres, P, transmis.

8. Procédé selon la revendication 7, où la longueur de la période de récence $L_r$ dépend au moins de la durée de séquence N, et/ou de la valeur du paramètre *tendency,* et/ou de la qualité moyenne $Q_r$ pendant la période de récence $L_r$

9. Procédé selon la revendication 6 ou la revendication 7, où l'effet de récence n'est pas appliqué en fonction de la valeur du paramètre *tendency,* ou si la qualité moyenne pendant la période de récence est supérieure à un seuil donné.

10. Client pour la réception d'un contenu multimédia d'un serveur utilisant la diffusion en streaming adaptative, ledit client étant destiné à calculer la qualité perçue d'une session média complète, $Q_{AVBuff}$, sur la base d'une liste d'évaluations de qualité pour des périodes de courte durée, S, et d'une liste d'événements de remise en mémoire tampon, B, incluant la position et la durée de chaque événement de remise en mémoire tampon, ledit client comprenant :

> un module de préparation (100) prévu pour recevoir une liste d'évaluations de qualité pour des périodes de courte durée, S, et pour graduer les valeurs des notes de qualité pour des périodes de courte durée, S, de l'intégralité de leur plage d'entrée originale jusqu'à une plage de sortie de consigne, et pour transformer les notes graduées en notes de sortie, S', correspondant à des éléments de média de 1 seconde, ledit module de préparation (100) étant en outre prévu pour recevoir la liste d'événements de remise en mémoire tampon, B ;
> un module d'extraction de paramètres (200) prévu pour analyser les notes par seconde, S', pour calculer un ensemble de paramètres, P, identifiant les caractéristiques de la session média, ledit module d'extraction de paramètres (200) étant en outre prévu pour effectuer un calcul de moyenne mobile sur la base des notes de sortie transmises, S', afin d'obtenir une note moyenne mobile, $S^{MA}$, et effectuer une évaluation de changement de direction de qualité, QC, sur la base de la note moyenne mobile, $S^{MA}$, et l'ensemble de paramètres calculé, P, comprenant un paramètre *tendency,* le paramètre *tendency* étant une valeur décrivant la forme des notes de qualité, S, sur toute la session ;
> un module d'intégration de qualité de codage (300) prévu pour, au moyen de l'ensemble de paramètres calculé, P, regrouper temporairement les notes par seconde, S', reçues du module de préparation (100), obtenir une note de qualité audiovisuelle intégrée, $Q_{AV}$, et pour réaliser une compensation d'oscillation de qualité en appliquant un facteur de dégradation à la qualité de session média, $Q_{AV}$;
> un module de qualité de mise en tampon (400) prévu pour recevoir la liste d'événements de remise en mémoire tampon, B, du module de préparation (100), et une liste de paramètres P du module d'extraction de paramètres (200), et prévu en outre pour calculer la dégradation, *DegBuff,* due aux événements de remise en mémoire tampon, ledit module de qualité de mise en tampon (400) effectuant différents calculs de dégradation en fonction de la longueur de l'événement de remise en mémoire tampon, et utilisant les pondérations *WLoc* et *WQ* comme facteurs de pondération, *WLoc* étant une pondération dépendante de la localisation, et *WQ* une pondération dépendante de la tendance ; et
> un module d'intégration et de dégradation (500) prévu pour obtenir la note de qualité finale, $Q_{AVBuff}$, à partir de la dégradation, *DegBuff,* due aux événements de remise en mémoire tampon et de la note de qualité audiovisuelle intégrée, $Q_{AV}$.

11. Client selon la revendication 10, où le module de préparation (100) est en outre prévu pour recevoir l'intervalle, n, entre chaque note de qualité en S.

12. Client selon la revendication 10 ou la revendication 11, où, lors du calcul de la note moyenne mobile, le module d'extraction de paramètres (200) est prévu pour exécuter un gonflage des notes, S', au début et à la fin avec la première et la dernière note en S' afin de générer des notes gonflées, $S^{padded}$.

13. Client selon la revendication 10, la revendication 11 ou la revendication 12, où l'évaluation de changement de direction de qualité, QC, est effectuée en comparant chaque note, indexée par p, avec la suivante, indexée par q, dans un certain pas de progression $s_{qc}$, et en contrôlant si la différence dépasse un seuil $t_{qc}$, où est en-deçà de celui-ci.

**14.** Client selon l'une des revendications 10 à 13, où l'ensemble de paramètres extrait, *P,* comprend au moins le nombre, *N,* de notes en *S',* et/ou une valeur *tendency* décrivant la forme des notes de qualité dans la durée, et/ou le nombre total de changements de direction de qualité dans les notes, *QDirChangesTot,* et/ou la durée en secondes de la période la plus longue sans changement de qualité positif et négatif, *QDirChangesLongest.*

**15.** Client selon l'une des revendications 10 à 14, où le module d'intégration de qualité de codage (300) est prévu pour réaliser une compensation d'effet de récence sur la base des notes de sortie, *S',* et de l'ensemble de paramètres, *P,* transmis.

# Fig. 1

# Fig. 2

# Fig. 3

Block 100

**Preparation Module**

S, B, n → S, n

| Scaling | → $S^{scaled}$ → | Temporal Transformation | → S' → *to other blocks* |

B → *to block 400*

# Fig. 4

Block 200

**Parameter Extraction Module**

*from block 100* → S'

| Moving Average Calculation | → $S^{MA}$ → | Quality Direction Change Estimation |

QC

| Parameter Extraction | → P → *to other blocks* |

# Fig. 5

Block 300 ─┐

**Encoding Quality Integration Module**

from block 100 → S' → Recency Effect Compensation → $Q_{AV}$ → Quality Oscillation Compensation → $Q_{AV}$ → to block 500

from block 200 → P

# Fig. 6

Block 400 ─┐

**Buffering Quality Module**

from block 100 → B → Impact of Initial Buffering → DegInit → Integration of Buffering Degradation Impact → DegBuff → to block 500

Impact of Distance → WLoc

Impact of Length → DegSingle

from block 200 → P → Impact of overall Quality → WQ

# Fig. 7

-------- weights (WR$_i$)

slope = s$_r$

WR$_1$ WR$_2$

WR$_{Lr}$ WR$_{N-Lr+k}$ WR$_N$

←------------------→
Sr
(recency period)

29

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008048155 A
- US 2012117225 A
- WO 2012055022 A1

### Non-patent literature cited in the description

- The MPEG-DASH standard for multimedia streaming over the internet. **SODAGAR, I.** MultiMedia. IEEE, 2011, vol. 18, 62-67
- **GROS, L. ; CHATEAU, N.** Instantaneous and overall judgements for time-varying speech quality: Assessments and relationships. *Acta Acustica,* 2001, vol. 87 (3), 367-377
- **CRANLEY, N. ; PERRY, P. ; MURPHY, L.** User perception of adapting video quality. *Int. J. Hum.-Comput. Stud.,* 2006, vol. 64 (8), 637-647
- *Technical Report Service Quality Definition and Measurement, http://www.ngmn.org/uploads/media/NGMN-P-SERQU_Service_Quality_Definition_and_Measurement_-_A_Technical_Report_by_NGMN_Alliance_v1_0_4_.pdf*
- **SESHADRINATHAN, K. ; BOVIK, A.** Temporal hysteresis model of time varying subjective video quality. *In: IEEE Int. Conference on Acoustics, Speech and Signal Processing,* 2011, 1153-1156
- **J. H. ROSENBLUTH.** ITU-T Delayed Contribution D.064: Testing the quality of connections having time varying impairments. *Source: AT&T,* 1998
- **B. WEISS et al.** Modeling Call Quality for Time-Varying Transmission Characteristics Using Simulated Conversational structures. *Acta Acustica,* 2009
- **SEUFERT, M. ; EGGER, S. ; SLANINA, M. ; ZINNER, T. ; HOSSFELD, T. ; TRAN-GIA, P.** A Survey on Quality of Experience of HTTP Adaptive Streaming. *IEEE Communication Surveys & Tutorials Communication Surveys & Tutorials,* 2015, vol. 17 (1), 469-492
- **M. N. GARCIA ; F. DE SIMONE ; S. TAVAKOLI ; N. STAELENS ; S. EGGER ; K. BRUNNSTRÖM ; A. RAAKE.** Quality of Experience and HTTP adaptive streaming: A review of subjective studies. *Sixth International Workshop on Quality of Multimedia Experience (QoMEX),* 2014
- Parametric non-intrusive assessment of audiovisual media streaming quality. *ITU-T P.1201,* 2012